(19) Europäisches Patentamt
European Patent Office
Office européen des brevets

(11) **EP 4 730 792 A1**

(12) **EUROPEAN PATENT APPLICATION**

(43) Date of publication:
**22.04.2026  Bulletin 2026/17**

(21) Application number: **24306742.8**

(22) Date of filing: **18.10.2024**

(51) International Patent Classification (IPC):
**H04N 19/12** *(2014.01)*     **H04N 19/159** *(2014.01)*
**H04N 19/176** *(2014.01)*    **H04N 19/593** *(2014.01)*
**H04N 19/61** *(2014.01)*

(52) Cooperative Patent Classification (CPC):
**H04N 19/12; H04N 19/159; H04N 19/176;
H04N 19/593; H04N 19/61**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **PURI, Saurabh
SAINT-LAZARE, J7T 0P6 (CA)**
• **BONNINEAU, Charles
MONTREAL, H2J 1G1 (CA)**
• **UTIDA BARBOSA FERREIRA, Renan
MONTREAL, H1X3H7 (CA)**
• **NASER, Karam
35250 MOUAZE (FR)**

(74) Representative: **Interdigital
Immeuble ZEN 2
845 A, avenue des Champs Blancs
35510 Cesson-Sévigné (FR)**

(54)     **ADAPTIVE SELECTION OF TRANSFORM FOR SPATIAL GEOMETRIC PARTITION**

(57)     In various implementations, method and devices are disclosed that adapts the selection of transform set for both regular and regression-based Spatial Geometric Partitioning Mode SGPM modes. For instance, for a regular SGPM block, a virtual intra prediction mode VIPM corresponding to a largest magnitude of values in a histogram of gradients (HoG) computed on a neighboring template is used to select the transform set instead of the split direction of the SGPM. For instance, for a regression-based SGPM block, a pre-defined scheme of transform set may be used for that block independently of the VIPM. According to various embodiments, the transform selection criterion may adaptively switch between using the VIPM versus using the split direction for SGPM. The transform selection may depend on various factors such as size of each partition, an intra predictor type (directional vs non-directional), a size of a maximum bin in HoG, a variance of HoG.

1000

Obtain a regular SGPM with a split direction for a block — 1010

Obtain a VIPM for the block — 1020

Select a transform set based on split direction or VIPM — 1030

Decode/Encode the block based on the selected transform set — 1040

**FIG. 10**

EP 4 730 792 A1

**Description**

**BACKGROUND**

The present application is related to a method and an apparatus for video encoding or decoding adaptively selecting a transform set for both regular and regression-based Spatial Geometric Partitioning Mode SGPM modes.

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

**BRIEF SUMMARY**

In various implementations, methods and devices are disclosed that provide a method selecting the transform set for both regular and regression-based Spatial Geometric Partitioning Modes SGPM, wherein the selection may adaptively switch between using a Virtual Intra Prediction Mode VIPM versus using the split direction as selection criterion.

According to a first aspect, a method of video encoding or decoding is disclosed that comprises obtaining a spatial geometric partition mode SGPM for a block of a picture, the SGPM blending a first partition of the block predicted based on a first intra prediction mode and a second partition of the block predicted based on a second intra prediction mode; a first transform set being associated to a split direction of the spatial geometric partition mode SGPM of the block; obtaining a virtual intra prediction mode VIPM corresponding to a largest magnitude of values in a histogram of gradients computed on a neighboring template of the block, an alternative transform set being associated to the virtual intra prediction mode; selecting a transform set for the block among one of the first transform set, or the alternative transform set; and encoding or decoding the block based on the selected transform set.

According to a second aspect, a method of video encoding or decoding is disclosed that comprises obtaining a regression-based spatial geometric partition mode SGPM for a block of a picture, the SGPM combining a first partition of the block predicted based on a first intra prediction mode and a second partition of the block predicted based on a second intra prediction mode using a blending matrix, wherein weights of the blending matrix are derived from values in a histogram of gradients computed on neighboring template of the block; selecting a fix transform set for the block regression-based spatial geometric partition mode SGPM; and decoding the block based on the selected transform set.

One or more embodiments also provide an apparatus for encoding/decoding video comprising one or more processors and at least one memory coupled to said one or more processors, wherein said one or more processors are configured to perform the encoding method according to any of the embodiments described herein.

One or more embodiments also provide a computer program comprising instructions which when executed by one or more processors cause the one or more processors to perform the encoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present disclosure;

FIG. 3 is a block diagram illustrating an example video decoder according to one or more embodiments of the present disclosure;

FIG.4 illustrates a Spatial Geometric Partitioning Mode (SGPM) according to one or more embodiments of the present disclosure;

**EP 4 730 792 A1**

FIG.5 and FIG. 7 illustrate Template Matching (TM) based reordering for Spatial Geometric Partitioning Mode (SGPM) according to one or more embodiments of the present disclosure;

FIG.6 illustrates an example of adaptive blending used for SGPM according to one or more embodiments of the present disclosure;

FIG.8 illustrates examples of SGPM candidates including a regression-based SGPM candidate according to one or more embodiments of the present disclosure;

FIG.9 illustrates examples of VIPM computation on regular SGPM for different partitions according to one or more embodiments of the present disclosure; and

FIG. 10 and FIG. 11 illustrate a generic encoding or decoding method using SGPM according to one or more embodiments of the present disclosure.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

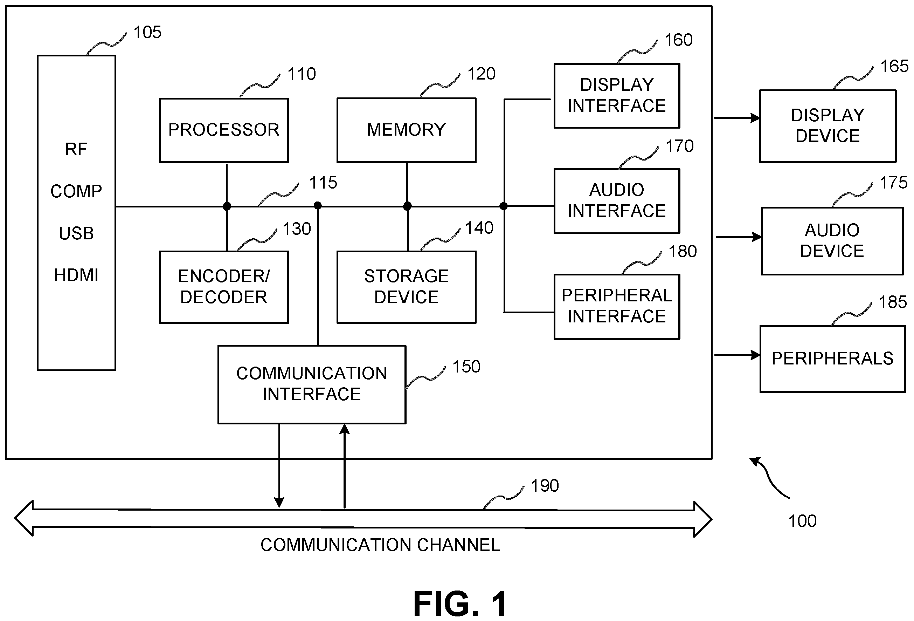

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as

3

indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

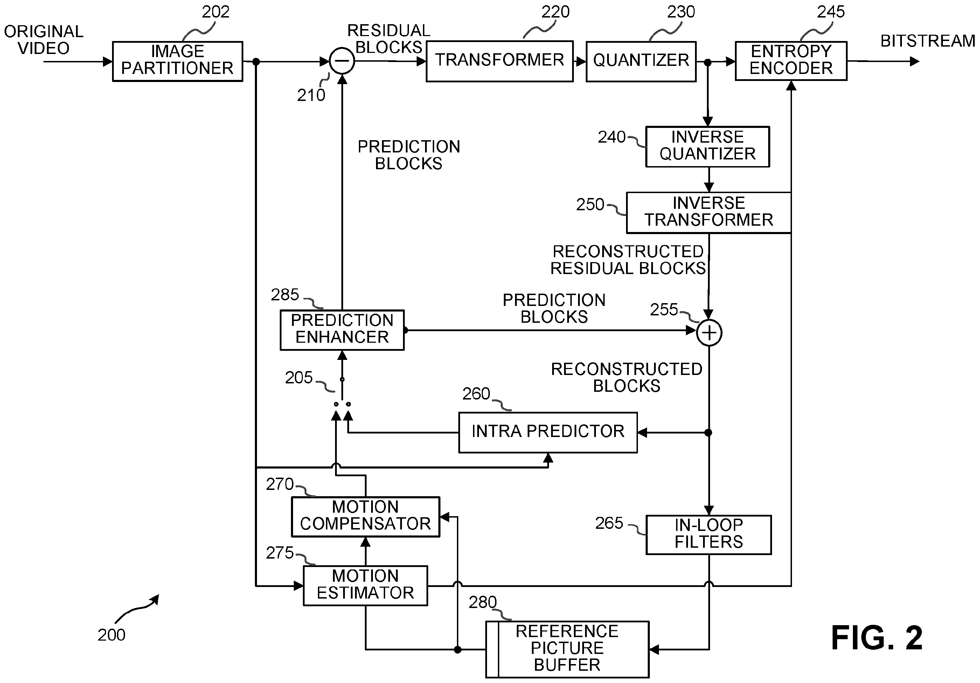

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

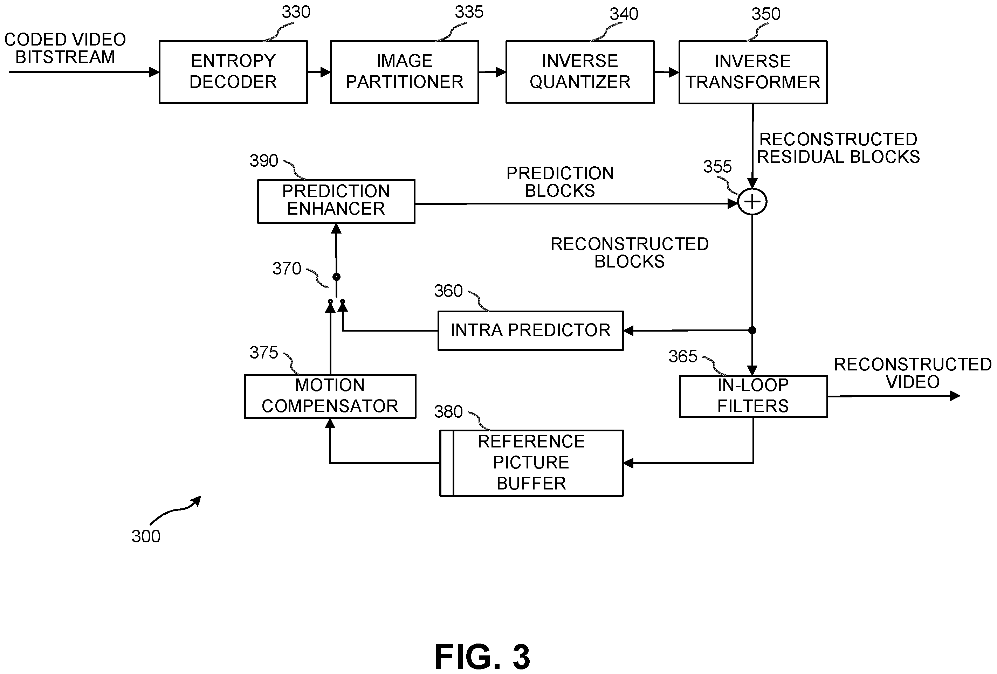

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Recent additions to video compression technology include various industry standards, versions of reference software and/or documentation such as Enhanced Compression Model (ECM) being developed by the JVET (Joint Video Exploration Team) group. The aim is to make further improvements to the existing VVC (Versatile Video Coding) standard and VSEI specification.

More specifically, recent improvements to video compression technology includes new prediction modes such as Spatial Geometric Partition Mode (SGPM). Others recent additions to ECM comprise decoder-side intra mode derivation (DIMD) and Template-based intra mode derivation (TIMD).

DIMD is a process that may be used by both the encoder and the decoder. According to DIMD, indices of two intra prediction modes (e.g., two intra prediction modes that most likely yield the predictions of the current block (e.g., luminance CB) of highest qualities according to DIMD) are derived (e.g., selected). The derivation may comprise creation (e.g., filling) of a Histogram of Oriented Gradients (HOG) of a context (e.g., an L-shape template) of decoded reference samples surrounding the current block. The indices of the two derived intra prediction modes may be the indices of the two HOG bins of largest magnitudes.

TIMD is a process that may be used by both the encoder and the decoder. According to TIMD, indices of the two intra prediction modes (e.g., two intra prediction modes that most likely yield the predictions of the current block (e.g., luminance CB) of highest qualities according to TIMD) are derived (e.g., selected). The derivation may comprise testing a plurality of intra prediction mode. For each tested intra prediction mode, a template of the current block (e.g., luminance CB) may be predicted from a set of decoded reference samples surrounding the template via this tested mode and the prediction SATD may be computed. The indices of the two derived intra prediction modes may be the indices of the two tested modes incurring the two smallest prediction SATDs.

A Spatial Geometric Partitioning Mode (SGPM) was introduced in ECM which is an intra mode that resembles the inter coding tool of geometric partitioning mode (GPM), where the two prediction parts are generated from intra predicted process.

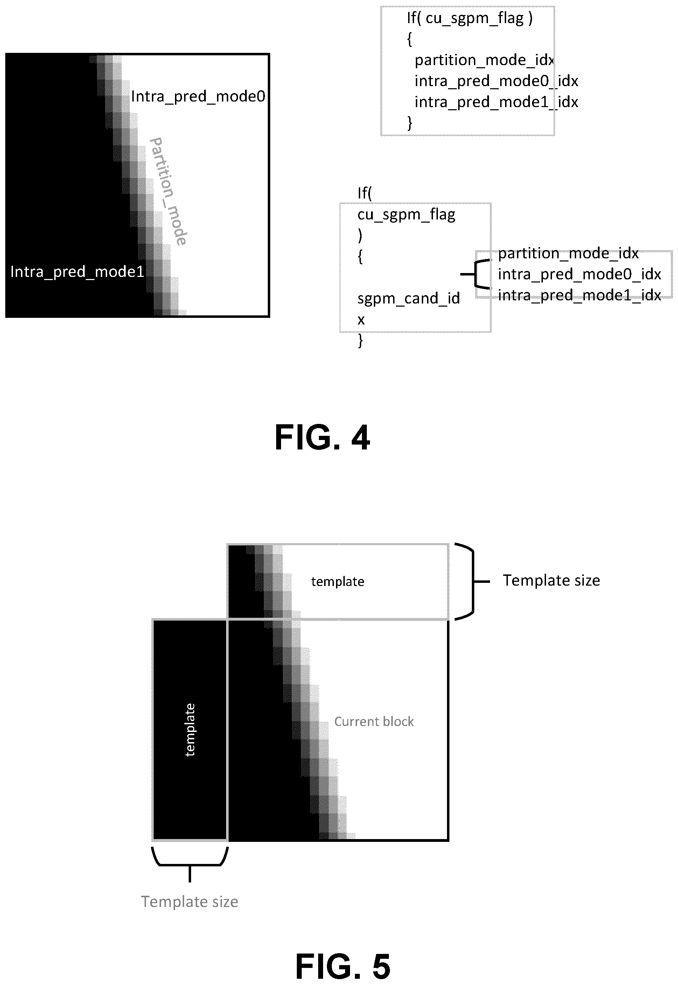

FIG.4 illustrates a Spatial Geometric Partitioning Mode (SGPM) according to one or more embodiments of the present disclosure. In a recent addition of SGPM to ECM, a candidate list is built with each entry containing one partition split and two intra prediction modes as shown in FIG. 4. 26 partition modes and 3 of intra prediction modes are used to form the combinations. The length of the candidate list is set equal to 16. The selected candidate index is signaled. The list may be reordered using TIMD or DIMD to further improve the coding performance.

FIG. 5 illustrates Template Matching (TM) based reordering for Spatial Geometric Partitioning Mode (SGPM) according to one or more embodiments of the present disclosure. The list may be reordered using template where the sum of absolute difference (SAD) between the prediction and reconstruction of the template is used for ordering. The prediction of the template is obtained by applying the corresponding intra prediction mode on the reference samples of the template, as shown in FIG. 5. The template size is fixed to 1. For each partition mode, an intra prediction mode (IPM) list is derived for each part using the same intra-inter GPM list derivation. The IPM list size is set to 3. In the list, TIMD derived mode is replaced by 2 derived modes with horizontal and vertical orientations.

SGPM may be applied with a constraint on blocks size. According to current ECM design, the width and height of a block may comply with the following constraints: 4<=width<=64, 4<=height<=64, width<height*8, height<width*8, width*height>=32.

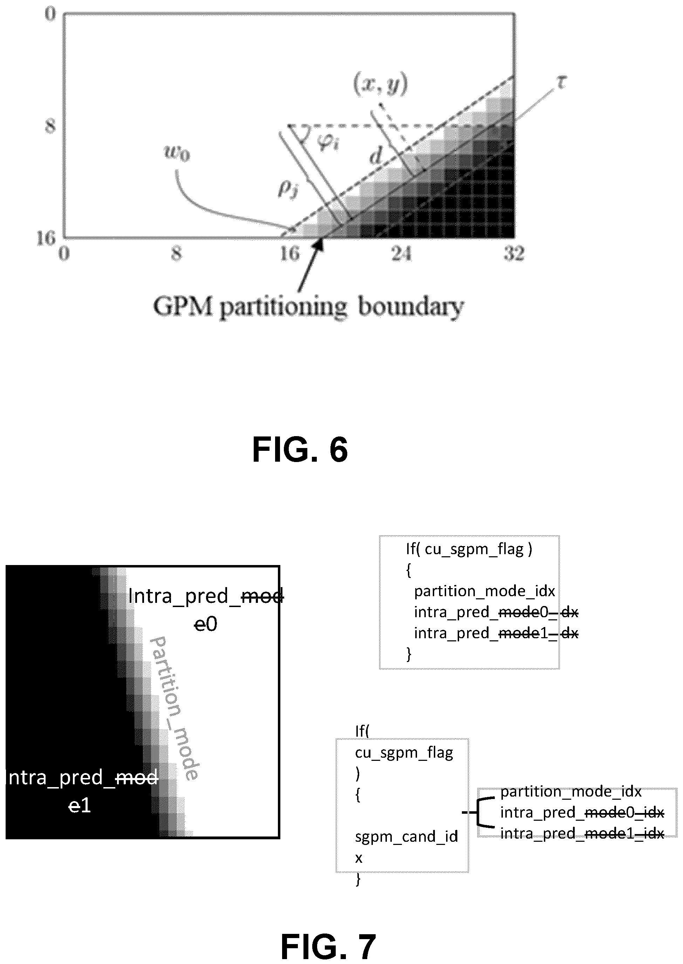

Besides, a PPS flag is coded to indicate whether a blending of two intra predictions is allowed or not. FIG.6 illustrates an example of adaptive blending used for SGPM according to one or more embodiments of the present disclosure. When this PPS flag is set to false, the blending is allowed, the following adaptive blending is also used for Spatial GPM, where blending depth $\tau$ shown in FIG. 6 is derived as follows:

- If min(width, height)==4, 1/2 $\tau$ is selected;
- else if min(width, height)==8, $\tau$ is selected;
- else if min(width, height)==16, 2 $\tau$ is selected;
- else if min(width, height)==32, 4 $\tau$ is selected;
- else, 8 $\tau$ is selected.

Otherwise (i.e. when the PPS flag is set to true), 1/4 $\tau$ is always used for Spatial GPM coded blocks to make sure no blending (meaning that either one or the other intra prediction is output) is used. Advantageously, this mode is used when SGPM block has partition angle completely horizontal or vertical, and much narrower blending width is used when SGPM block has other partition angles. The skilled in the art will note that the flag is set to true in current Common Test Conditions (CTC) for the screen content videos.

FIG.7 illustrates a modified Template Matching (TM) based reordering for Spatial Geometric Partitioning Mode (SGPM) according to a variant embodiment. In this variant, it is proposed to further include block-vector based prediction obtained from Intra Template Matching (IntraTMP) and/or Intra Block Copy (IBC) modes of the neighboring blocks in the candidate list of SGPM. That is, SGPM mode tests block vectors of neighboring CU's in addition to regular prediction modes. Specifically, the following has been proposed:

- Obtain block vectors of all merge candidates
- Select the best block vector according to SATD template cost
- Test up to 6 best block vectors (if available) inside SGPM candidate list construction

As shown on FIG. 7, it is about generalizing the two intra predictors from regular to regular or block-vector (BV) based. That is, the new SGPM candidate could be the combination of one partition mode and two regular or BV-based intra predictors. Identifiers intra_pred_0 and intra_pred_1 correspond to be regular prediction or BV-based prediction obtained from neighboring IntraTMP and/or IBC information.

Decoder side intra mode derivation (DIMD) relies on the assumption that the reconstructed pixels surrounding a given block to be predicted carry information to infer the texture directionality in this block, i.e. the intra prediction modes that most likely generate the predictions with the highest qualities.

First, gradients are extracted from a context of reconstructed pixels around this block. Then, these gradients are used to fill a Histogram of Oriented Gradients (HoG). Finally, the intra prediction modes (IPMs) that most likely give the predictions with highest qualities are derived from this HoG. It derives up to five intra modes from the reconstructed neighbor samples, and those five predictors are combined with the planar mode predictor with the weights derived from the HoG.

The prediction fusion is applied as a weighted average of the above six predictors. To this aim, the weight of planar is fixed to 21/64 (~1/3). The remaining weight of 43/64 (~2/3) is then shared among the five HoG IPMs, proportionally to the amplitude of their HoG bars.

As mentioned above, it has also been proposed to adaptively select between planar and block-vector (BV) based prediction obtained from intra template matching (IntraTMP) or intra block copy (IBC) mode of neighboring blocks for the blending with the angular intra prediction(s). Specifically, in a first step, the block vectors of all merge candidates are collected. In a second step, the sum of absolute transformed differences (SATD) template cost is used to select between block-vector based prediction and planar prediction. Then in a third step, the same blending process (e.g., blending weights) of DIMD is used.

Finally, in yet another recent prior art approach, DIMD process as described above may used by many tools such as IBC, IntraTMP, SBT, ISP etc to derive a Virtual Intra Prediction Mode (VIPM). The original DIMD process is slightly modified for this case. Specifically, from the computed HoG, the highest bin with the maximum amplitude is output as the virtual intra prediction mode (VIPM).

In a current development of ECM, for the blocks predicted using regular SGPM mode, the split direction (or partition mode) is used to derive both the primary and secondary transform set used for coding of the residual block. Specifically, a Look-Up Table (LUT) is used to map the split directions to the intra prediction modes which includes mapping them to either a planar mode or to an angular mode through an index. An example of this LUT is provided below:

LUT[GEO_NUM_ANGLES] = {50, 0, 44, 41, 34, 27, 0, 0, 18, 0, 0, 9, 66, 59, 56, 0, 50, 0, 44, 41, 34, 27, 0, 0, 18, 0, 0, 9, 66, 59, 56, 0};

This intra prediction mode is then used to derive the primary or secondary transform set.

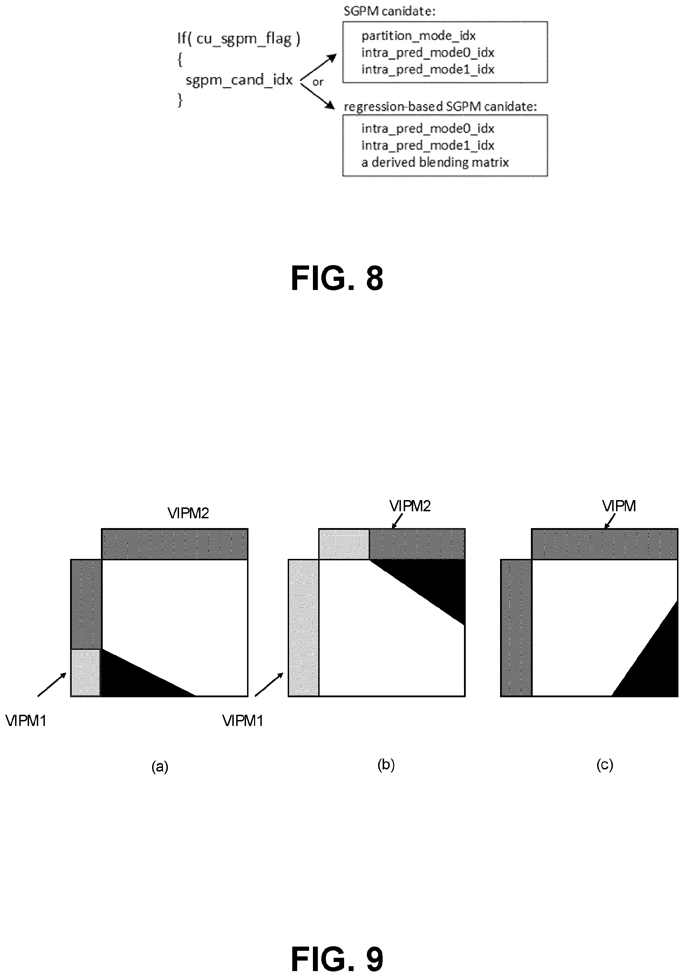

In a recent prior art approach, a regression-based SGPM blending has been proposed where the two intra predictors are blend using a blending matrix. The blending matrix is computed on a 1-line template. The regression-based SGPM candidates are tested in competition with the regular SGPM candidates. FIG.8 illustrates examples of SGPM candidates including a regression-based SGPM candidate according to one or more embodiments of the present disclosure. For regression-based SGPM, the DIMD mode (i.e. the VIPM) is used to select the transform set since the blending is not performed using the partition mode (or split direction).

It is desirable to improve the selection of the transform set for both regular and regression-based SGPM by proposing a consistent design for both regular and regression-based SGPM. Since VIPM computation using the DIMD mode on the reconstructed template provides a good indication of the overall directionality of the current block, VIPM may provide better coding gains compared to using the split direction, however the inventors have recognized some cases where VIPM may raise some performance issue.

The present disclosure proposes a method to select the transform set that may adaptively switch between using the VIPM versus using the split direction as selection criterion. The criterion for the selection may depend on various factors such as size of each partition, an intra predictor type (directional vs non-directional), a size of a maximum bin in histogram of gradients (HoG), a variance of HoG as non-limiting examples of factors.

According to a first embodiment, it is proposed to use DIMD mode to select the transform set for regular SGPM. According to different variants of the first embodiment, the selection of the transform may further depend on the availability of the template used in the DIMD process, on the analysis of HoG, on the directionality of the intra predictor used in regular SGPM, the difference of size between partitions with respect to a first level.

According to a second embodiment, it is proposed to use a fix transform set for regression based SGPM. According to different variants of the second embodiment, the selection of the transform may depend on the analysis of HoG.

According to a third embodiment, it is proposed to use DIMD mode to select the transform set only for certain block sizes of the regular SGPM, others block sizes may use the split direction as selection criterion.

According to a fourth embodiment, the DIMD mode may be computed only on the largest partition. Alternatively, DIMD may be computed on the smallest partition and if template is not available for smallest partition, split direction may be used.

**Feature(s) associated with using DIMD mode to select transform set for regular SGPM are provided herein.**

In the first embodiment, it is proposed to use DIMD mode to select the transform set for the regular SGPM mode. A virtual intra prediction mode VIPM is obtained that corresponds to a largest magnitude of values in a histogram of gradients computed on neighboring template of the block being partitioned with regular SGPM. As with regression-based SGPM, an alternative transform set is associated to the virtual intra prediction mode and may be used as the transform set for the block with regular SGPM. In other words, a VIPM is computed using the DIMD like process on the template of the current regular SGPM coded block. The VIPM is used to select the transform set.

In a first variant, the transform set associated to the split direction of the regular SGPM coded block may be selected for performing transform/inverse transform on the block responsive to determining that neighboring template of the block is not available. For instance, the DIMD method may not be used when the full template is not available, meaning that at least a part of the template area is missing. For example, the full template may not be available if the block is at a top, left or top-left boundary or the block is at a VPDU boundary. In this case, the split direction is used for deriving the transform set for the regular SGPM mode. In another variant, the DIMD method may not be used only when only a partial template area is available.

In a second variant, the transform set associated to the split direction of the regular SGPM may be selected responsive to determining that a variance of the histogram of gradients computed on neighboring template of the block is above a first level. The use of DIMD method for deriving the transform set may be conditional to the analysis of the HoG computed using DIMD method. For example, a variance of the HoG is computed and compared to a first level (i.e. first value) to determine whether the DIMD method is used or not. Advantageously, this variant allows using DIMD when there is high confidence in VIPM meaning one significant direction. For instance, the level or threshold value may depend on the block size.

In a third variant, the transform set associated to the split direction of the regular SGPM may be selected responsive to determining that at least one of the first intra prediction mode or the second prediction mode is a non-directional intra prediction mode, wherein the first intra prediction mode or the second prediction mode are respectively the prediction mode of the first and of the second partition in the SGPM. Thus, the use of DIMD method may be conditioned to whether one or both predictors in SGPM mode are non-directional modes (e.g. IBC or IntraTMP). Advantageously, this variant allows restricting the DIMD-based transform set selection only for blocks that are predicted using non-directional modes.

In fourth variant, the transform set associated to the split direction of the regular SGPM may be selected responsive to determining that a difference of size between the first partition and the second partition is less than a second level (i.e. second value). For instance, the second level may be zero., or may be related to the size of the block. The use of DIMD method may be conditioned to the size of the SGPM partitions. For example, the size of SGPM partition may be determined as the number of pixels in a partition. In a first case, DIMD mode is used when

$$size(partition1) - size(partition2) < threshold$$

In another example, the DIMD mode is used when

$$size(partition1) - size(partition2) \geq threshold$$

For instance, in case of blending, a pixel in a partition is a pixel with a non-zero weight.

**Feature(s) associated with using fixed transform set for regression based SGPM are provided herein.**

In the second embodiment, the regression-based SGPM method is advantageously improved. It proposes to use a fixed transform set (for example, transform set corresponding to planar mode) when a block is coded with regression based SGPM. The reason behind this is that the regression-based SGPM blends the two predictors using a blending matrix computed on the template. If this mode is selected, the residual signal is expected to have low energy. A fixed transform set (e.g. planar set) may be advantageously used.

As a variant, the use of planar set is further conditioned to the statistical analysis of HoG computed using DIMD mode. For example, if variance of HoG is below a certain threshold, a planar mode is used otherwise, the VIPM provided by DIMD mode is used to determine the transform set.

In addition to above variant, if the size of maximum bin is greater than a given threshold, the transform corresponding to planar mode is used. This is because the HoG indicates a clear directionality in which case the prediction is usually accurate, leading to a low energy residual.

**Feature(s) associated with block size dependent strategy for the use of DIMD are provided herein.**

In the third embodiment, the transform set associated to the split direction of the regular SGPM may be selected responsive to determining that a size of the block coded with SGPM is less than a third level. Indeed, it is proposed that the VIPMs to determine the transform type is made size dependent for the SGPM mode. Specifically, the VIPMs is used only when the number of pixels in a block is greater than a certain threshold (i.e. third level). For example, for the blocks with size smaller than or equal to 16x16 (256 pixels), the split direction is used to determine the transform type.

In a variant of the third embodiment adapted to the regression-based SGPM, the fix transform set is selected responsive to determining that a size of the block coded with SGPM is less than a third level, otherwise the transform set is selected based on a virtual intra prediction mode VIPM corresponding to a largest magnitude of values in a histogram of gradients computed on neighboring template of the block.

**Feature(s) associated with computing DIMD mode only on the largest partition are provided herein.**

In the fourth embodiment, the neighboring template of the block comprises neghboring decoded pixels adjacent to a largest partition among the first and second partition in the SGPM mode. FIG.9 illustrates examples of VIPM computation on regular SGPM for different partition modes according to one or more embodiments of the present disclosure. In this embodiment, it is proposed to compute DIMD on the template adjacent to the largest partition in the SGPM mode to derive the VIPM. In that case, a HoG is computed for both partitions independently, and a VIPM (VIPM1 and VIPM2 on FIG. 9) is respectively computed for both partitions based on the corresponding HoG. The largest partition may be determined by considering the number of samples in the template related to each partition. For example, in FIG. 9a, VIPM2 may be used to select the transform set. In **Error! Reference source not found.**FIG. 9b, VIPM1 may be used to select the transform set. In **Error! Reference source not found**.FIG. 9c, the largest partition consists of full template hence no special processing is made. In this case, split direction is used to compute the transform set.

According to further variants of fourth embodiment, the statistics of the HoGs of both SGPM partitions may be analyzed to decide whether VIPM1, VIPM2 or split direction is used.

In the first variant, let's denote $HoG_1$ and $HoG_2$ the HoGs related to the first and second SGPM partitions, respectively. If the cumulative sum of gradients in $HoG_1$ is greater than the cumulative sum of gradients in $HoG_2$, then the VIPM related to $HoG_1$ may be used to derive the transform set. The reverse may also be considered.

In another variant, if cumulative sum of gradients in $HoG_1$ is greater than the cumulative sum of gradients in $HoG_2$, and the absolute difference between the cumulative sum of gradients of $HoG_1$ and $HoG_2$ is greater than a threshold, then the VIPM related to $HoG_1$ is used to derive the transform set. Otherwise, the split direction is used to derive the transform set.

In another variant, if the absolute difference between the amplitude of the largest bin of both HoGs is above a certain threshold, the VIPM related to the HoG containing the largest bin is used to derive the transform set. Otherwise, the split direction is used to derive the transform set.

In another variant, if the amplitude of the largest bin in both HoGs is below a certain threshold, split direction is used to derive the transform set.

In another variant, if the standard deviation of the HoG of the selected VIPM according to one of the variants above is below a certain threshold, split direction is used to derive the transform set.

According to further variants of fourth embodiment, DIMD may be computed based on the accuracy of the VIPM compared to the actual intra prediction mode of the corresponding SGPM partition.

In another variant, if the selected VIPM does not exactly match with the actual intra prediction mode of the corresponding SGPM partition, the split direction is used to derive the transform set.

In another variant, if the absolute difference between the selected VIPM and the actual intra prediction mode is below a certain threshold (i.e., if the VIPM and the actual intra prediction mode are too different), the split direction is used to derive the transform set.

According to further variants of fourth embodiments, DIMD may be computed on the smallest partition. That is, in contrast to the main fourth embodiment, in this variant, DIMD may computed on the smallest partition and if template is not available for smallest partition, split direction is used. This is because the residual signal in a smaller partition may be noisier and performing a DIMD on its reference samples would help with better selection of transform set. The smallest partition may be determined by considering the number of samples in the template related to each partition or by the number of pixels in the partition. In this variant, VIPM1, VIPM2 and split direction (or partition mode) is used in FIG. 9a, FIG. 9b, FIG. 9c, respectively.

**Feature(s) associated with a generic encoding or decoding method implementing the present principles are provided herein.**

Various embodiments previously described that may be used in combination or independently and may be implemented in a generic decoding or encoding method as follows.

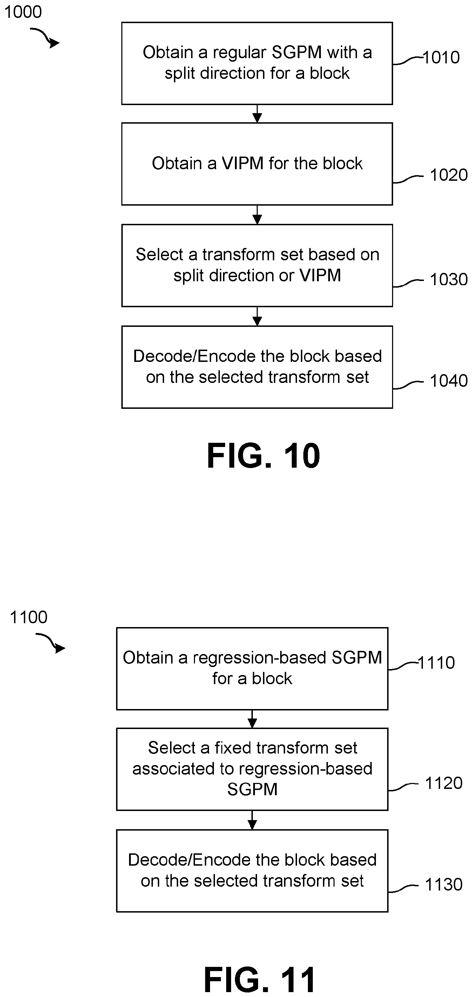

FIG. 10 and FIG. 11 illustrate a generic encoding or decoding method using SGPM according to one or more embodiments of the present disclosure. The method 1000 of FIG. 10 or the method 1100 of FIG. 11 may be implemented in an encoder of FIG. 2 or a decoder of FIG. 3. For sake of clarity, only the steps of an encoding or decoding deemed relevant to the present disclosure are illustrated on FIG. 10 and FIG. 11.

FIG. 10 illustrate a generic encoding or decoding method according to the first embodiment wherein transform selection of regular SGPM may be improved using VIPM. In a step 1010, a block of a picture to be coded or decoded with a spatial geometric partition mode SGPM is obtained. As explained previously, a SGPM combines a first partition of the block predicted based on a first intra prediction mode and a second partition of the block predicted based on a second intra prediction mode using a blending matrix. A first transform set may be associated to a split direction of the spatial geometric partition mode SGPM of the block, for instance using a LUT. In a step 1020, virtual intra prediction mode VIPM is obtained by the DIMS like process wherein the VIPM corresponds to a largest magnitude of values in a histogram of gradients HoG computed on a neighboring template of the block. Accordingly, an alternative transform set may be associated to the virtual intra prediction mode, for instance using a LUT. Then, in a step 1030, a transform set for the block is selected among one of the first transform set, or the alternative transform set. Any of the variant embodiments previously described may be used in combination for the selection. Then, the process for encoding or decoding the block based on the selected transform set is performed in a step 1040 notably by performing the transform or inverse transform according to the selected transform set.

FIG. 11 illustrate a generic encoding or decoding method according to the second embodiment wherein transform selection of regression-based SGPM may be improved using a pre-defined scheme of transform. In a step 1110, a block of a picture, to encoded or decoded with a regression-based spatial geometric partition mode SGPM is obtained. As detailed above, the regression-based SGPM combines a first partition of the block predicted based on a first intra prediction mode and a second partition of the block predicted based on a second intra prediction mode using a blending matrix, wherein weights of the blending matrix are derived from values in a histogram of gradients computed on neighboring template of the block for instance using a DIMD like process. In a step 1120, a fix transform set, i.e; a pre-defined transform scheme for this partition mode, is selected for the block coded with regression-based spatial geometric partition mode SGPM. Any of the variant embodiments previously described may be used in combination for activating/deactivating the selection based on VIPM on a case-by-case basis. for the selection and decoding the block based on the selected transform set. Then, the process for encoding or decoding the block based on the selected transform set is performed in a step 1130 notably by performing the transform or inverse transform according to the selected transform set.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

    i. Encoding, into coded video data, syntax elements that can enable the decoder to decode the coded video data, according to any of the embodiments described herein.

    ii. A bitstream that includes one or more of the described syntax elements, or variations thereof, whether transmitted, stored, or otherwise made available.

    iii. Creating, transmitting, receiving, and/or decoding of the bitstream.

    iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

    i. session description protocol (SDP), for example as described in RFCs and/or used in conjunction with real-time transport protocol (RTP) transmission.

    ii. hypertext transfer protocol (HTTP) live Streaming (HLS) manifest transmitted over HTTP.

    iii. dynamic adaptive streaming over HTTP (DASH) media presentation description (MPD) descriptors, for example as used in DASH and transmitted over HTTP.

    iv. RTP header extensions, for example as used during RTP streaming.

    v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method of decoding, comprising:

   obtaining a spatial geometric partition mode SGPM for a block of a picture, the SGPM blending a first partition of the block predicted based on a first intra prediction mode and a second partition of the block predicted based on a second intra prediction mode; a first transform set being associated to a split direction of the spatial geometric partition mode SGPM of the block;
   obtaining a virtual intra prediction mode VIPM corresponding to a largest magnitude of values in a histogram of gradients computed on neighboring template of the block, an alternative transform set being associated to the virtual intra prediction mode;
   selecting a transform set for the block among one of the first transform set or the alternative transform set; and
   decoding the block based on the selected transform set.

2. An apparatus comprising one or more processors, wherein the one or more processors are configured for:

   obtaining a spatial geometric partition mode SGPM for a block of a picture, the SGPM blending a first partition of the block predicted based on a first intra prediction mode and a second partition of the block predicted based on a second intra prediction mode; a first transform set being associated to a split direction of the spatial geometric partition mode SGPM of the block;
   obtaining a virtual intra prediction mode VIPM corresponding to a largest magnitude of values in a histogram of gradients computed on neighboring template of the block, an alternative transform set being associated to the virtual intra prediction mode;
   selecting a transform set for the block among one of the first transform set or the alternative transform set; and
   decoding the block based on the selected transform set.

3. The method of claim 1 or the apparatus of claim 2 wherein the first transform set is selected responsive to determining that neighboring template of the block is not available.

4. The method of any of claims 1, 3 or the apparatus of any of claims 2, 3 wherein the first transform set is selected responsive to determining that a variance of the histogram of gradients computed on neighboring template of the block is above a first level.

5. The method of any of claims 1, 3-4 or the apparatus of any of claims 2-4 wherein the first transform set is selected responsive to determining that at least one of a first intra prediction mode or the second prediction mode is a non-directional intra prediction mode.

6. The method of any of claims 1, 3-5 or the apparatus of any of claims 2-5 wherein the first transform set is selected responsive to determining that a difference of size between the first partition and the second partition is less than a second level.

7. The method of any of claims 1, 3-6 or the apparatus of any of claims 2-6 wherein the first transform set is selected responsive to determining that a size of the block coded with SGPM is less than a third level.

8. The method of any of claims 1, 3-7 or the apparatus of any of claims 2-7 wherein the neighboring template of the block comprises neghboring decoded pixels adjacent to a largest partition among the first and second partition in the SGPM mode.

9. A method of decoding, comprising:

obtaining a regression-based spatial geometric partition mode SGPM for a block of a picture, the SGPM combining a first partition of the block predicted based on a first intra prediction mode and a second partition of the block predicted based on a second intra prediction mode using a blending matrix, wherein weights of the blending matrix are derived from values in a histogram of gradients computed on neighboring template of the block;
selecting a fixed transform set for the regression-based spatial geometric partition mode SGPM; and
decoding the block based on the selected transform set.

10. An apparatus comprising one or more processors, wherein the one or more processors are configured for:

obtaining a regression-based spatial geometric partition mode SGPM for a block of a picture, the SGPM combining a first partition of the block predicted based on a first intra prediction mode and a second partition of the block predicted based on a second intra prediction mode using a blending matrix, wherein weights of the blending matrix are derived from values in a histogram of gradients computed on neighboring template of the block;
selecting a fixed transform set for the regression-based spatial geometric partition mode SGPM; and
decoding the block based on the selected transform set.

11. The method of claim 9 or the apparatus of claim 10 wherein the fix transform set is the transform set associated to planar intra prediction mode.

12. The method of any of claims 9, 11 or the apparatus of any of claims 10, 11 wherein the fixed transform set is selected responsive to determining that a variance of the histogram of gradients computed on neighboring template of the block is below a third level.

13. The method of any of claims 9, 11-12 or the apparatus of any of claims 10-12 wherein the fixed transform set is selected responsive to determining that a size of the block coded with SGPM is less than a third level, otherwise the transform set is selected based on a virtual intra prediction mode VIPM corresponding to a largest magnitude of values in a histogram of gradients computed on neighboring template of the block.

14. A method of encoding, comprising:

obtaining a spatial geometric partition mode SGPM for a block of a picture, the SGPM blending a first partition of the block predicted based on a first intra prediction mode and a second partition of the block predicted based on a second intra prediction mode; a first transform set being associated to a split direction of the spatial geometric partition mode SGPM of the block;
obtaining a virtual intra prediction mode VIPM corresponding to a largest magnitude of values in a histogram of gradients computed on neighboring template of the block, an alternative transform set being associated to the virtual intra prediction mode;
selecting a transform set for the block among one of the first transform set or the alternative transform set; and
encoding the block based on the selected transform set.

15. An apparatus comprising one or more processors, wherein the one or more processors are configured for:

obtaining a spatial geometric partition mode SGPM for a block of a picture, the SGPM blending a first partition of the block predicted based on a first intra prediction mode and a second partition of the block predicted based on a second intra prediction mode; a first transform set being associated to a split direction of the spatial geometric partition mode SGPM of the block;
obtaining a virtual intra prediction mode VIPM corresponding to a largest magnitude of values in a histogram of gradients computed on neighboring template of the block, an alternative transform set being associated to the virtual intra prediction mode;
selecting a transform set for the block among one of the first transform set, the alternative transform set; and

encoding the block based on the selected transform set.

**FIG. 1**

EP 4 730 792 A1

FIG. 2

EP 4 730 792 A1

**FIG. 3**

Intra_pred_mode0

partition_mode

Intra_pred_mode1

```
If( cu_sgpm_flag )
{
  partition_mode_idx
  intra_pred_mode0_idx
  intra_pred_mode1_idx
}
```

```
If(
cu_sgpm_flag
)
{

sgpm_cand_id
x
}
```

partition_mode_idx
intra_pred_mode0_idx
intra_pred_mode1_idx

# FIG. 4

template

Template size

template

Current block

Template size

# FIG. 5

**FIG. 6**

**FIG. 7**

If( cu_sgpm_flag )
{
    sgpm_cand_idx
}

SGPM canidate:

partition_mode_idx
intra_pred_mode0_idx
intra_pred_mode1_idx

or

regression-based SGPM canidate:

intra_pred_mode0_idx
intra_pred_mode1_idx
a derived blending matrix

# FIG. 8

VIPM2

VIPM2

VIPM

VIPM1

VIPM1

(a)

(b)

(c)

# FIG. 9

1000

Obtain a regular SGPM with a
split direction for a block ——1010

Obtain a VIPM for the block —— 1020

Select a transform set based on
split direction or VIPM —— 1030

Decode/Encode the block based
on the selected transform set —— 1040

# FIG. 10

1100

Obtain a regression-based SGPM
for a block ——1110

Select a fixed transform set
associated to regression-based
SGPM —— 1120

Decode/Encode the block based
on the selected transform set —— 1130

# FIG. 11

Europäisches
Patentamt

European
Patent Office

Office européen
des brevets

# EUROPEAN SEARCH REPORT

**Application Number**

EP 24 30 6742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BONNINEAU (INTERDIGITAL) C ET AL: "EE2-4.1 related: On Multiple Transform Set Selection for LFNST/NSPT", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0184 ; m67275 18 April 2024 (2024-04-18), XP030317588, Retrieved from the Internet: URL:https://jvet-experts.org/doc_end_user/documents/34_Rennes/wg11/JVET-AH0184-v7.zip JVET-AH0184-v2.docx [retrieved on 2024-04-18] | 1-3,5-7, 14,15 | INV. H04N19/12 H04N19/159 H04N19/176 H04N19/593 H04N19/61 |
| Y | * abstract * * section 1 * | 4,8 | |
| | ----- | | |
| X | WANG (OPPO) F ET AL: "Non-EE2: Multiple Transform Set Selection for LFNST/NSPT", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0062 18 January 2024 (2024-01-18), XP030313883, Retrieved from the Internet: URL:https://jvet-experts.org/doc_end_user/documents/33_Teleconference/wg11/JVET-AG0062-v2.zip JVET-AG0062-v2.docx [retrieved on 2024-01-18] | 1-3,5-7, 14,15 | **TECHNICAL FIELDS SEARCHED (IPC)** H04N |
| Y | * section 1 * | 4,8 | |
| | ----- | | |
| | -/-- | | |

The present search report has been drawn up for all claims

| Place of search | Date of completion of the search | Examiner |
|---|---|---|
| Munich | 24 June 2025 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 3**

| | Europäisches Patentamt European Patent Office Office européen des brevets | **EUROPEAN SEARCH REPORT** | **Application Number** EP 24 30 6742 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BONNINEAU (INTERDIGITAL) C ET AL: "AHG12: Multiple Transform Set Selection for Intra MTS", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0307 ; m67917 21 April 2024 (2024-04-21), XP030317790, Retrieved from the Internet: URL:https://jvet-experts.org/doc_end_user/documents/34_Rennes/wg11/JVET-AH0307-v4.zip JVET-AH0307-v5.docx [retrieved on 2024-04-21] * section 1 * ----- | 1-8,14, 15 | |
| Y | WO 2024/010356 A1 (LG ELECTRONICS INC [KR]) 11 January 2024 (2024-01-11) * paragraph [0127] * ----- | 4 | |
| | | | TECHNICAL FIELDS SEARCHED (IPC) |
| Y | EP 4 258 669 A1 (BEIJING XIAOMI MOBILE SOFTWARE CO LTD [CN]) 11 October 2023 (2023-10-11) * paragraph [0048] * ----- -/-- | 8 | |

The present search report has been drawn up for all claims

| Place of search | Date of completion of the search | Examiner |
|---|---|---|
| Munich | 24 June 2025 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 30 6742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI (ALIBABA-INC) X ET AL: "Non-EE2: Regression-based SGPM blending", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0102 15 July 2024 (2024-07-15), XP030320282, Retrieved from the Internet: URL:https://jvet-experts.org/doc_end_user/documents/35_Sapporo/wg11/JVET-AI0102-v2.zip JVET-AI0102.docx [retrieved on 2024-07-15] | 9,10 | |
| Y | * section 2 * | 11-13 | |
| | ----- | | |
| Y | BONNINEAU (INTERDIGITAL) C ET AL: "EE2-4.5: Multiple Transform Set Selection for Intra MTS", 147. MPEG MEETING; 20240715 - 20240719; SAPPORO; (MOTION PICTURE EXPERT GROUP OR ISO/IEC JTC1/SC29/WG11), , no. m68387 5 July 2024 (2024-07-05), XP030321382, Retrieved from the Internet: URL:https://dms.mpeg.expert/doc_end_user/documents/147_Sapporo/wg11/m68387-JVET-AI0064-v1-JVET-AI0064-v1.zip JVET-AI0064-v1.docx [retrieved on 2024-07-05] * sections 1 and 2 * ----- | 11-13 | **TECHNICAL FIELDS SEARCHED (IPC)** |

The present search report has been drawn up for all claims

| Place of search | Date of completion of the search | Examiner |
|---|---|---|
| Munich | 24 June 2025 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

page 3 of 3

Europäisches
Patentamt

European
Patent Office

Office européen
des brevets

**Application Number**

EP 24 30 6742

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-8, 14, 15

   Methods of deriving a transform set for a block of a picture among a first transform set of a spatial geometric partitioning mode (SPGM) and an alternative transform set of a virtual intra prediction mode (VIPM) derived from a histogram of gradients computed on a neighbouring template of the block. Corresponding apparatuses.
   ---

2. claims: 9-13

   Method of deriving a fixed transform set for a block of a picture based on a regression-based SPGM that uses a histogram of gradients computed on a neighbouring template of the block. Corresponding apparatus.
   ---

## ANNEX TO THE EUROPEAN SEARCH REPORT
## ON EUROPEAN PATENT APPLICATION NO.

EP 24 30 6742

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2025

| Patent document cited in search report | | Publication date | Patent family member(s) | | Publication date |
|---|---|---|---|---|---|
| WO 2024010356 | A1 | 11-01-2024 | CN | 119586140 A | 07-03-2025 |
| | | | EP | 4554224 A1 | 14-05-2025 |
| | | | KR | 20250029869 A | 05-03-2025 |
| | | | WO | 2024010356 A1 | 11-01-2024 |
| EP 4258669 | A1 | 11-10-2023 | CN | 118947111 A | 12-11-2024 |
| | | | EP | 4258669 A1 | 11-10-2023 |
| | | | WO | 2023193552 A1 | 12-10-2023 |

For more details about this annex : see Official Journal of the European Patent Office, No. 12/82